# EUROPÄISCHE PATENTANMELDUNG

(11) **EP 2 159 399 A1**
(43) Veröffentlichungstag der Anmeldung: **03.03.2010**
(21) Anmeldenummer: 08015144.2
(22) Anmeldetag: 27.08.2008
(51) Int. Cl.: F02C 7/224, F01D 25/12, F01D 25/26

(54) **Verfahren zum Vorwärmen eines in einer Gasturbine zu verbrennenden Brennstoffs und Gasturbine mit einem Brennstoff-Leitungssystem**

(71) Anmelder: Siemens Aktiengesellschaft, 80333 München (DE)
(72) Erfinder: Benkler, Francois, Dr., 40880 Ratingen (DE); Böttcher, Andreas, Dr., 40882 Ratingen (DE); Etzold, Tino, 04600 Altenburg (DE); Grundei, Daniel, 46049 Oberhausen (DE); Lohse, Uwe, 42899 Remscheid (DE); Maldfeld, Ekkehard, Dr., 45479 Mülheim an der Ruhr (DE); Meimerstorf, Maximilian, 47551 Bedburg-Hau (DE); Socha, Waldemar, 10555 Berlin (DE)

(57) **Zusammenfassung**

Verfahren zum Vorwärmen eines in einer Gasturbine (10) zu verbrennenden Brennstoffs und Gasturbine (10) mit einem Brennstoff-Leitungssystem (32).
Die Erfindung betrifft ein Verfahren zum Vorwärmen eines in einer Gasturbine (10) zu verbrennenden Brennstoffs, bei dem zur Eliminierung der ansonsten erforderlichen elektrischen Heizung und zur Wirkungsgradsteigerung der Brennstoff vor dem Eindüsen in die Brennkammer (14) in einer Gehäusewand (24) der Gasturbine (10) entlang dieser geführt wird, damit dieser die Gehäusewand (24) kühlt.

## Beschreibung

Die Erfindung betrifft ein Verfahren zum Vorwärmen eines in einer Gasturbine zu verbrennenden Brennstoffs. Des Weiteren betrifft die Erfindung eine Gasturbine mit einem Gehäuse, einem Verdichter und einem Brennstoff-Leitungssystem zum Zuführen eines Brennstoffs zu Brennern der Gasturbine.

Es ist bekannt, dass der in einer Gasturbine verbrannte Brennstoff zur Optimierung seiner Verbrennung auf ein bestimmtes Temperaturniveau vorgewärmt wird. Die Vorwärmung wird dabei sowohl für flüssige Brennstoffe als auch für gasförmige Brennstoffe durchgeführt und erfolgt derzeit mittels einer zusätzlichen elektrischen Heizung.

Weiter ist ein allgemeines Bestreben vorhanden, die Turbineneintrittstemperaturen von Gasturbinen weiter anzuheben, um einen besonders emissionsarmen und effizienten Betrieb von Gasturbinen zu erreichen. Dabei werden auch größere Druckverhältnisse in Gasturbinenverdichtern angestrebt. Die steigenden Heißgastemperaturen und höheren Druckverhältnisse bedingen jedoch bei den Gehäusebauteilen der Gasturbine den Einsatz von höherwertigen Stahlgusswerkstoffen, damit die Gehäusebauteile den dann höheren Temperaturen dauerhaft standhalten können. Die höherwertigen Stahlgusswerkstoffe sind jedoch vergleichsweise teuer, so dass deren Einsatz nach Möglichkeit vermieden werden soll.

Aufgabe der Erfindung ist daher die Bereitstellung einer Gasturbine, deren Gehäusebauteile den beim Betrieb weiter erhöhten Materialtemperaturen dauerhaft zuverlässig standhalten.

Weitere Aufgabe der Erfindung ist die Angabe eines Verfahrens zum Betrieb einer Gasturbine, mittels dem die Gasturbine besonders effizient betrieben werden kann.

Die auf das Verfahren gerichtete Aufgabe wird durch ein Verfahren gemäß den Merkmalen von Anspruch 1 gelöst. Eine Gasturbine gemäß den Merkmalen von Anspruch 5 löst die auf diese gerichtete Aufgabe.

Der Erfindung liegt die Erkenntnis zugrunde, dass die Wärmezufuhr in die Gehäusebauteile, welche aufgrund der weiter gesteigerten Turbineneintrittstemperaturen oder aufgrund der weiter gesteigerten Druckverhältnisse im Verdichter auftreten, zur Nutzung der Brennstoffvorwärmung verwendet werden kann. Insofern wird der Brennstoff dann als Kühlmittel verwendet, welcher die Gehäusebauteile während des Betriebs der Gasturbine ausreichend kühlt. Hierzu wird der Brennstoff, bevor er in die Brenner geführt wird, durch im Gehäuse integrierte Leitungsabschnitte geführt, welche Teil des Brennstoff-Leitungssystems zum Zuführen des Brennstoffs zu den Brennern der Gasturbine sind.

Durch die erfindungsgemäße Maßnahme kann der Einsatz von höherwertigen Stahlgusswerkstoffen für Gehäusebauteile vermieden werden, was Materialkosten einspart. Anstatt durch die zusätzliche Heizung wird der Brennstoff beim Betrieb mittels der Abwärme der Gehäuse erwärmt, wodurch die zusätzliche elektrische Heizung wegfallen kann. Deren Anschaffungskosten können somit eingespart werden. Zudem verbessert der Wegfall der Betriebskosten der zusätzlichen elektrischen Heizung die Energiebilanz der Kraftwerksanlage. Dies erhöht den Wirkungsgrad der Gasturbine.

Durch die Verwendung des kalten Brennstoffs zur Kühlung von Gehäusebauteilen werden höhere Betriebstemperaturen und andere Betriebszustände wie Steigerung der Grenzeinsatztemperatur des Gehäusematerials ohne Einschränkung möglich. Selbstverständlich kann auch die Kühlung des Verdichtergehäuses oder des Turbinengehäuses mit der dem Verdichter entnommenen Kühlluft eingeschränkt werden oder sogar entfallen, was den Verbrauch an Kühlluft wirkungsgradsteigernd minimiert.

Weitere vorteilhafte Ausgestaltungen sind in den Unteransprüchen angegeben.

Gemäß einer ersten vorteilhaften Ausgestaltung der Erfindung wird der Brennstoff durch das Gehäuse eines Gasturbinenverdichters oder durch das Gehäuse einer Turbine der Gasturbine geführt. Dementsprechend ist die Gehäusewand Teil eines Verdichtergehäuses des Gasturbinenverdichters, wobei vorzugsweise der stromabwärtige Teil des Verdichtergehäuses die betreffende Gehäusewand ist, innerhalb welcher der Leitungsabschnitt des Brennstoff-Leitungssystems angeordnet ist. Durch die Kühlung des stromabwärtigen Teils des Verdichtergehäuses mittels Brennstoff kann insbesondere beim Start der Gasturbine eine gleichmäßigere Durchwärmung von axial benachbarten Gehäusebauteilen erreicht werden. Außerdem ermöglicht diese Ausgestaltung die Erhöhung des Druckverhältnisses im Gasturbinenverdichter, ohne dass dazu höherwertige Stahlgusswerkstoffe verwendet werden müssen. Der Einsatz von konventionellen, warmfesten Gusswerkstoffen über die bisherige Einsatzgrenztemperatur hinaus ist möglich.

Um entlang des Umfangs des Verdichtergehäuses eine gleichmäßige Kühlung zu erreichen, wird vorgeschlagen, dass entlang dessen Umfangs verteilt mehrere Leitungsabschnitte des Brennstoff-Leitungssystems angeordnet sind, durch die jeweils parallel oder auch nacheinander Brennstoff geführt wird.

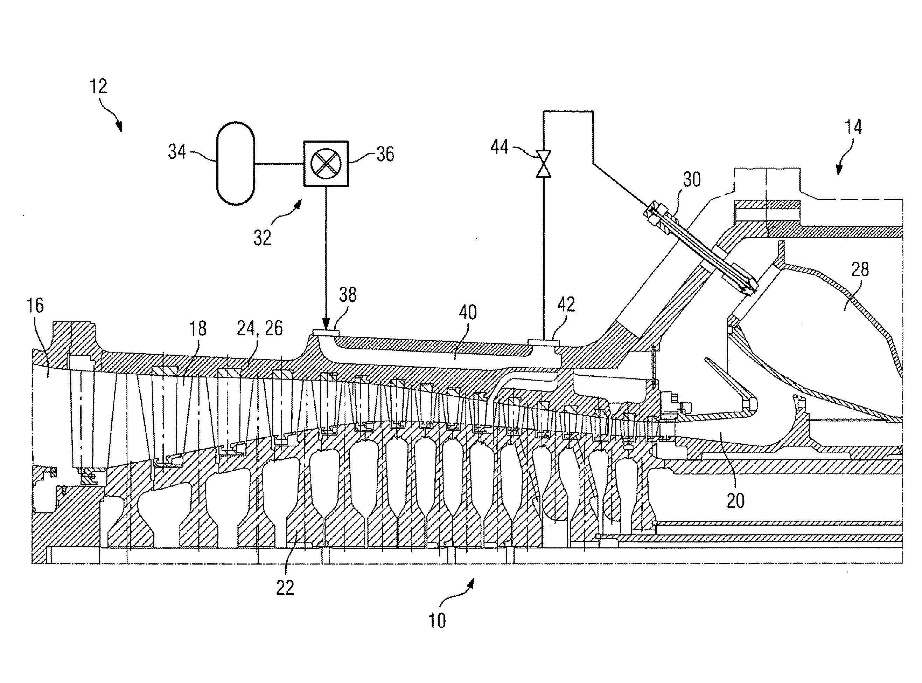

Weitere Merkmale und Vorteile der Erfindung ergeben sich aus der nachfolgenden Beschreibung anhand der Zeichnung. Es zeigt die einzige Figur einen Längsschnitt durch den Verdichter einer Gasturbine.

Die einzige Figur zeigt einen Längsschnitt durch eine stationäre, axial durchströmte Gasturbine 10 im axialen Abschnitt des Gasturbinenverdichters 12 und der Brennkammer 14. Der Gasturbinenverdichter 12 wird nachfolgend als Verdichter 12 bezeichnet. In der einzigen Figur weiter links dargestellt ist der Ansaugkanal 16, durch den der Verdichter 12 Umgebungsluft ansaugt. An den Ansaugkanal 16 schließt sich der im Querschnitt ringförmige Strömungspfad 18 des Verdichters 12 an, welcher ausgangsseitig in einen Verdichterausgangsdiffusor 20 mündet. Im Strömungspfad 18 sind alternierend Laufschaufeln und Leitschaufeln jeweils in Kränzen angeordnet. Der Strömungspfad 18 wird radial innen von einem Rotor 22 und radial außen von einer Wand 24 begrenzt, die in der dargestellten Ausgestaltung vom Gehäuse 26 des Verdichters 12 gebildet ist. Die Wand 24 kann auch anstelle einer äußeren Gehäusewand von einer inneren Gehäusewand gebildet werden, welche dann als Leitschaufelträger bezeichnet ist. Im vorderen, d.h. in der FIG weiter links dargestellten Abschnitt des Strömungspfads 18 sind vergleichsweise lange Verdichterschaufeln angeordnet, zum hinteren, in der FIG weiter rechts dargestellten Abschnitt des Strömungspfads 18 wird die Schaufelblattlänge der Verdichterschaufeln zunehmend kürzer.

In der einzigen Figur rechts dargestellt ist die ringförmige Brennkammer 14, die stirnseitig mit einer Vielzahl von entlang des Umfangs verteilten Brennern 30 ausgestattet sind. Die Brenner 30 sind an ein nur schematisch dargestelltes Brennstoff-Leitungssystem 32 angeschlossen, mittels dem ein Brennstoff zu den Brennern 30 der Gasturbine 10 geführt werden kann. Das Brennstoff-Leitungssystem 32 umfasst dabei einen Brennstofftank 34 und eine damit verbundene Fördereinrichtung 36. Die Fördereinrichtung 36 ist ausgangsseitig mit einem Einlass 38 eines Leitungsabschnitts 40 verbunden, welcher in der das Gehäuse 26 bildenden Gehäusewand 24 der Gasturbine 10 angeordnet ist. An einem dem Einlass 38 gegenüberliegenden Ende des Leitungsabschnitts 40 ist ein Auslass 42 angeordnet, welcher mit einem Stellorgan 44 eingangsseitig verbunden ist. Der Ausgang des Stellorgans 44 ist dann weiter mit dem Eingang einer der Brenner 30 verbunden.

Beim Betrieb der Gasturbine 10 saugt der Verdichter 12 durch den Ansaugkanal 16 Umgebungsluft an und verdichtet diese innerhalb seines Strömungspfades 18 zu einem hochverdichteten Massenstrom. Dieser Massenstrom wird größtenteils zur Verbrennung des über das Brennstoff-Leitungssystems 32 zugeführten Brennstoffs verwendet. Ein anderer Teil des Massenstroms wird zur Kühlung von Bauteilen in einer nicht weiter dargestellten Turbineneinheit der Gasturbine 10 verwendet. Bei der Verdichtung der angesaugten Umgebungsluft tritt in dieser eine Temperaturerhöhung auf, die dazu führt, dass der Verdichter 12 vom vorderen, d.h. einlassseitigen Ende hin zum hinteren, d.h. auslassseitigen Ende zunehmend höhere Temperaturen erfährt. Bei besonders großen Druckverhältnissen des Verdichters 12, beispielsweise von Druckverhältnissen größer als 1:20, können derartig hohe Temperaturen auftreten, dass der Einsatz eines konventionellen, warmfesten Gusswerkstoffes für das Gehäuse 26 des Verdichters 12 nicht mehr zulässig ist, da die dauerhaft auftretenden Temperaturen die Einsatzgrenztemperatur des betreffenden Werkstoffs überschreitet. Um den Einsatz von höherwertigen, kostenintensiven Stahlgusswerkstoffen für die Gehäusebauteile der Gasturbine 10 zu vermeiden, erfolgt die Vorwärmung des durch das Brennstoff-Leitungssystem 32 geführten Brennstoffs mittels der im Gehäuse 26 auftretenden Wärme. Hierzu ist erforderlich, dass zumindest ein Leitungsabschnitt 40 des Brennstoff-Leitungssystems 32 sich durch das Innere der Gehäusewand 24 entlang dieser erstreckt, um den Brennstoff darin zu führen. Während der Führung des Brennstoffs durch den Leitungsabschnitt 40 kühlt dieser die Gehäusewand 24 ab und erwärmt sich gleichzeitig währenddessen. Nach der Aufwärmung des Brennstoffs wird dieser über das Stellorgan 44 den Brennern 30 der Gasturbine zugeführt, welche es in die Brennkammer 14 mit verdichteter Luft vorgemischt eindüsen, wonach das Gemisch dann zur Bildung eines Heißgases verbrannt wird. Die im Stand der Technik zusätzliche elektrische Heizung zur Vorwärmung des Brennstoffs kann somit entfallen.

Das Verfahren kann dabei sowohl für flüssigen Brennstoff als auch für gasförmigen Brennstoff durchgeführt werden.

Selbstverständlich weist die Gasturbine 10 nicht nur einen einzigen Leitungsabschnitt 40 auf, welcher in der Gehäusewand 24 des Verdichtergehäuses 26 angeordnet ist. Entlang des Umfangs des Verdichtergehäuses 26 betrachtet können eine Vielzahl von gleichmäßig verteilten Leitungsabschnitten 40 angeordnet sein, die jeweils über einen separaten Einlass mit Brennstoff versorgt werden können, und über einen separaten Auslass, aus dem der Brennstoff wieder abgeführt werden kann. Zweckmäßigerweise kann die Anzahl der am Umfang verteilten Leitungsabschnitte 40 gleich der Anzahl der Brenner 30 sein, die die Gasturbine aufweist. Daneben ist auch denkbar, den oder die Leitungsabschnitte 40 derart auszugestalten, dass diese(r) mäanderförmig von einem mittleren Abschnitt des Verdichtergehäuses 26 zu einem hinteren Abschnitt des Verdichtergehäuses 26 und wieder zurück zum mittleren Abschnitt und weiter fort zu dem hinteren Abschnitt des Verdichtergehäuses 26 geführt wird. Alternativ dazu ist auch eine um 90° gedrehte Anordnung der Mäanderform denkbar.

Alternativ oder zusätzlich kann ein weiterer Leitungsabschnitt 40 zum Vorwärmen des Brennstoffs in einem Turbinengehäuse der Gasturbine 10 angeordnet sein.

Selbstverständlich kann das Gehäuse 26 auch als ein Innengehäuse in Form eines Verdichters- und/oder Turbinenleitschaufelträgers ausgebildet sein, die in der Regel noch höheren Temperaturen ausgesetzt sind als die äußeren, den Druckmantel bildenden Gehäuse.

Insgesamt wird mit der Erfindung ein Verfahren zum Vorwärmen eines in einer Gasturbine 10 zu verbrennenden Brennstoffs angegeben, bei dem zur Eliminierung der ansonsten erforderlichen elektrischen Heizung und zur Wirkungsgradsteigerung der Brennstoff vor dem Eindüsen in die Brennkammer 14 in einer Gehäusewand 24 der Gasturbine 10 entlang dieser geführt wird, damit dieser die Gehäusewand 24 kühlt.

## Patentansprüche

1. Verfahren zum Vorwärmen eines in einer Gasturbine (10) zu verbrennenden Brennstoffs,
bei dem vor dem Eindüsen des Brennstoffs in die Brennkammer (14) der Brennstoff in einer Gehäusewand (24) der Gasturbine (10) entlang dieser geführt wird.

2. Verfahren nach Anspruch 1,
bei dem der Brennstoff durch das Gehäuse (26) eines Gasturbinenverdichters (14) oder durch das Gehäuse einer Turbine der Gasturbine geführt wird.

3. Verfahren nach Anspruch 2,
bei dem der Brennstoff durch einen hinteren Gehäuseabschnitt des Gasturbinenverdichters (14) geführt wird.

4. Verfahren nach Anspruch 1, 2 oder 3,
bei dem der Brennstoff gasförmig oder flüssig ist.

5. Gasturbine (10),
mit einem Gehäuse (26), einem Verdichter (12) und einem Brennstoff-Leitungssystem (32) zum Zuführen eines Brennstoffs zu Brennern (30) der Gasturbine (10),
wobei das Leitungssystem (32) zumindest einen Leitungsabschnitt (40) umfasst, welcher in einer das Gehäuse (26) bildenden Gehäusewand (24) der Gasturbine (10) angeordnet ist.

6. Gasturbine (10) nach Anspruch 5,
bei dem die Gehäusewand (24) Teil eines Verdichtergehäuses (26) des Gasturbinenverdichters (12), vorzugsweise der stromabwärtige Teil des Verdichtergehäuses (26) ist.

7. Gasturbine (10) nach Anspruch 5,
bei dem die Gehäusewand (24) Teil eines Turbinengehäuses (26) der Turbinen der Gasturbine ist.

8. Gasturbine (10) nach Anspruch 5, 6 oder 7,
bei dem das Gehäuse (26) mehrere, entlang des Umfangs verteilte Leitungsabschnitte (40) aufweist, die Teil des Brennstoff-Leitungssystems (32) sind.
